# EUROPEAN PATENT SPECIFICATION

(11) **EP 0 467 278 B1**
(45) Date of publication and mention of the grant of the patent: **21.09.1994**
(21) Application number: 91111816.4
(22) Date of filing: 16.07.1991
(51) Int. Cl.: B01J 19/24, B01J 19/18, C08G 59/00

(54) **Process for continuously producing reaction products**
Verfahren zur kontinuierlichen Herstellung von Reaktionsprodukten
Procédé pour la production continue de produits de réaction

(30) Priority: 20.07.1990 US 555863; 18.01.1991 US 643877
(43) Date of publication of application: 22.01.1992
(73) Proprietor: THE DOW CHEMICAL COMPANY, Midland, Michigan 48640 (US)
(72) Inventor: Shirtum, Robert P., Freeport, Texas 77541 (US); McCoy, David D., Lake Jackson, Texas 77566 (US); Wernli, Walter L., Angleton, Texas 77515 (US)
(74) Representative: Sternagel, Hans-Günther, Dr.

(56) References cited:
- EP-A- 0 264 760
- DE-A- 1 091 568
- FR-A- 1 361 063
- US-A- 3 129 232

## Description

This invention relates to processes for continuously producing reaction products from the reaction of reactant materials in a reactor, more particularly in a horizontal or vertical reactor and, in one particular aspect to producing epoxy resins and in one embodiment to a horizontal or vertical continuous epoxy resin reactor for producing epoxy resins.

Epoxy resins' superior toughness, chemical resistance, heat resistance, adhesion and electrical properties have contributed to their wide use in electrical and structure applications and in protective coatings. An epoxy group (1,2-epoxide or oxirane), a three-membered cyclic ether group, characterizes the epoxy resins. A curing agent reacts with these monomers or prepolymers to produce high performance thermosetting plastics.

The diglycidyl ethers of bisphenol A are a common form of epoxy resin. They are produced by well known processes such as the reaction of dihydric phenols and epihalohydrin. In one such process the epihalohydrin and dihydric phenol react in the presence of a catalyst to produce a halohydrin-containing resin intermediate which is then reacted with a basic acting material, for example, sodium hydroxide. Treatment of the resulting reaction mixture, such as by water-washing, removes residual catalyst and salt, producing a liquid epoxy resin.

Various dihydric phenols are employed; for example, hydroquinone, resorcinol, catechol, and bisphenols. Suitable epihalohydrins which can be employed here include, for example, epichlorohydrin, epibromohydrin, epiiodohydrin, methylepichlorohydrin, methylepibromohydrin, methylepiiodohydrin and mixtures thereof. Suitable catalysts which can be employed herein include, for example, quaternary ammonium compounds, quaternary phosphonium compounds, sulfonium compounds and mixtures thereof.

Suitable quaternary ammonium catalysts include, for example, tetramethyl ammonium chloride, benzyl trimethyl ammonium chloride, triethanol ammonium chloride, tetraethanol ammonium hydroxide and dodecyl dimethylbenzyl ammonium naphthenate. Suitable quaternary phosphonium catalysts include, for example, those quaternary phosphonium compounds disclosed in US-A-3,948,855; 3,477,990 and 3,341,580 and CA-A-858,646. Other suitable catalysts include, for example, ethyl triphenyl phosphonium iodide, ethyl triphenyl phosphonium bicarbonate, ethyl triphenyl phosphonium acetate^{.}acetic acid complex, benzyl triphenyl phosphonium chloride, tetrabutyl phosphonium chloride and benzyl trimethyl ammonium chloride mixtures thereof. Suitable sulfonium catalysts include thiourea catalysts such as tetramethyl thiourea; N,N'-dimethyl thiourea: N,N'-diphenyl thiourea and mixtures as well as thiodiethanol and other sulfonium precursors.

Also, suitable catalysts include, for example, the basic ion exchange resins such as DOWEX® (trademark of The Dow Chemical Company) MSA-1, DOWEX 11, DOWEX SBR and mixtures thereof.

Specific processes for producing epoxy resins are described in US-A-4,313,886; 2,986,551; 3,069,434; 2,840,541; 3,221,032; 4,017,523; 4,751,280; and 4,008,133; and in various foreign references, including GB-A-2,095,679; DE-A-2,909,706 and 2,745,150; DD-A-218,767 and 213,226; and CZ-A-212,856 and 210,447. Known processes for producing liquid epoxy resins from bisphenol-A and excess epichlorohydrin are either continuous or discontinuous processes operating in the presence of an alkali metal hydroxide in quantities of 2 moles or about 2 moles, for every mole of bisphenol-A.

In a typical discontinuous process, a concentrated aqueous solution of alkali metal hydroxide is fed to a solution of bisphenol-A in epichlorohydrin at atmospheric or slightly lower than atmospheric pressure. The temperature is controlled to continuously distill the water introduced with the alkali metal hydroxide as an azeotropic mixture with the epichlorohydrin. After completion of the addition of the solution of alkali metal hydroxide, all the water is removed, the unreacted epichlorohydrin is recovered by distillation at pressures lower than atmospheric and the alkali metal chloride, a sub-product of the reaction is separated by filtration of the solids or dissolution in water with subsequent dilution of the brine/organic mixture. Liquid epoxy resins obtained in such a process have a high viscosity, an undesirable color, and because of their relatively high chlorine content, are not suitable for various applications. Liquid epoxy resins made this way can have a residual chlorine content of the order of 0.5 to 0.8 percent by weight.

Several methods of producing liquid epoxy resins by a continuous process, by effecting the reaction of the bisphenol-A with the epichlorohydrin in a number of reactors installed in series are well known in the art. In such processes, the bisphenol-A and the epichlorohydrin are continuously fed to a first reactor, while the alkali metal hydroxide in aqueous solution is introduced into each reactor up to a maximum quantity equal, or about equal to 2 moles for every mole of bisphenol-A. The reaction products are discharged continuously from the last reactor and are subjected to decantation to separate the liquid epoxy resin from the water and the alkali metal chloride which is a by-product of the reaction.

In various conventional processes, the reaction is carried out in the presence of oxygenated organic substances of alcoholic or ketonic nature. The presence of extraneous substances in these procedures can cause a decrease in the purity of the resin produced, and the reactive substances such as the alcohols or the ketones can give rise to secondary reactions with formation of various sub-products. The added substances are eventually separated from the liquid epoxy resin, and are purified before recycling them to the reaction. The liquid epoxy resin is separated from the water and the alkali metal halide which is a sub-product of the reaction.

In other prior art processes, chemistries for various reactions are carried out in batch reactors with vapor removal and concurrent reactant addition systems. To conduct such reactions in a continuous flow process would require: 1) relatively fast reaction kinetics (for example, 1 to 2 minutes) in a pipe reactor, or 2) an infinite series of continuous stirred tank reactors (in practice 10 to 20 reactors in series).

In the past, reaction of a dichlorohydrin aqueous intermediate with an alkali metal salt to epoxidize the dichlorohydrin results in side reactions with the water present which give rise to hydrolysis products which include glycerin monochlorohydrin, glycidol, and glycerin itself. These by-products are all undesirable because they are difficult to remove from the aqueous effluent of the process.

Furthermore, the difficulty and the lack of spontaneity in the separation of liquid epoxy compounds from water or aqueous saline solutions, is well known. To facilitate this separation, substances capable of varying the interface tension or the density have been used in the art; but the addition of extraneous substances to the system causes a decrease in the purity of the resin and the removal of these substances often proves to be very difficult. However, when operating without these extraneous substances, lengthy periods of decantation at elevated temperature are necessary causing undesirable secondary reactions.

From US-A-3,129,232 a continuous process is known for reacting epoxyalkyl halides with hydroxyl group-containing compounds in a vertically multistage reactor system which is provided with means to permit upward flow of the reaction mixture and means to prevent backmixing between two compartments. Each compartment of the reactor is provided with stirring means and means to supply further reactants.

This reactor is appropriate for use with polymerization reactions that do not contain solids.

EP-A-264 760 describes a batch process for the preparation of epoxy resins by reacting epihalohydrin with an aromatic material containing an active hydrogen atom reactive with epihalohydrin in the presence of an organic solvent, an alkali metal hydroxide and optionally in the presence of a catalyst. Insoluble materials are removed from the reaction mixture by suitable mechanical solid separation means.

Other processes in which an efficient reactor system would be useful include processes for producing epihalohydrins and other chemistries requiring rapid separation of a vapor product from a liquid reaction media or a vapor by-product from a liquid reaction product.

There has long been a need for an effective and efficient continuous reactor and for processes employing such a reactor. There has long been a need for an effective and efficient continuous process for producing liquid epoxy resins. There has long been a need for apparatus for use in such processes. There has long been a need for a continuous process for the production of liquid epoxy resins in which reaction by-products may be removed at various stages in the process. There has long been a need for a continuous process for the production of liquid epoxy resins in which catalysts and reactants can be added in a staged manner to minimize yield losses to undesirable side reactions.

The present invention provides processes for the effective continuous production of reaction products from the reaction of reactant materials in a continuous reactor; for example, but not limited to liquid epoxy resins.

In one embodiment of the present invention, a process for the continuous preparation of reaction products is provided from the reaction of liquid reactant materials wherein said liquid reactant materials comprise either: epihalohydrin and active hydrogen-containing species; 1,3-dihalo-2-propanol or 2,3-dihalo-1-propanol or mixtures thereof, the process comprising
(i) contacting the reactant materials for producing the reaction products in a first compartment of a reactor system; (ii) stirring the materials therein, (iii) flowing reaction products and by-products from the first compartment of the reactant system to at least one more compartment of the reactor system
and (iiia) adding additional reactant materials to the at least one more compartment, all compartments intercommunicating with each other (iv), stirring the materials in all compartments, and (vi) withdrawing the liquid reaction products from at least one compartment of the reactor system, characterized by the reactant material comprising in each case an alkali metal hydroxide, the reactor system being horizontally aligned and the process comprising additionally withdrawing vapor reaction products from the compartments from a common space above them.

The solution of the object of the invention includes a process for the continuous preparation of a liquid epoxy resin, the process including (i) introducing epihalohydrin and an active hydrogen-containing species into an initial compartment of a reactor system, (ii) stirring the materials in the initial compartment, (iii) flowing the reaction product over a weir into a next adjacent compartment of the reactor system, (v) flowing reaction product from said next adjacent compartment to one or more additional reation compartments of the reaction system, and withdrawing reaction products from the last compartments of the reactor system, characterized by the reactor being horizontally aligned, step (i) comprising the addition of alkali metal hydroxide, in step (ii) the materials reacting to form as a reaction product a glycidyl derivative of the active hydrogen-containing species, the process including furthermore (iv) adding additional alkali metal hydroxide to said next adjacent compartment and stirring the materials therein, (vi) introducing a solvent into the horizontal reactor system, removing by-product water from reactions in the compartments in a codistillate of the solvent and the by-product water from a common space above the compartments with which each compartment communicates.

Another embodiment of the invention provides a process for the continuous preparation of a liquid epoxy resin in a multiple-intercommunicating-compartment continuous reactor system, each compartment
communicating with a common overhead space within the system, the process comprising (i) introducing a 10:1 molar ratio mixture of epichlorohydrin and bisphenol A to a first compartment, (iii) liquid reaction product flowing from one compartment to a next adjacent compartment
and thus through all compartments,
(vii) withdrawing a
liquid epoxy resin product from the last compartment characterized by
the reactor system being horizontally aligned, step
(i) comprising furthermore introducing a stream of glycol monoether solvent along with said mixture and the process comprising furthermore
(ii) feeding aqueous sodium hydroxide into each of the compartments of the system
except to a last compartment, (iv)
maintaining pressure in the system at about 220 bar (165 mm Hg),
(v) maintaining temperature in the system at about 65°C, (vi) controlling the water concentration in the system at less than 0.3 weight percent, and (iix) keeping the total residence time of reactants in the compartments between 100 and 500 minutes.

Another embodiment of the invention provides a process for the continuous preparation of reaction products from the reaction of liquid reactant materials wherein said liquid reactant materials comprise either: epihalohydrin and an active hydrogen-containing species; 1,3-dihalo-2-propanol or 2,3-dihalo-1-propanol or mixtures thereof, the process comprising (i) contacting the reactant materials for producing the reaction products in a first compartment of a vertical reactor system; (ii) stirring the materials therein, (iii) flowing reaction products and by-products from the first compartment of the reactant system to at least one more compartment of the reactor system and (iiia)
adding additional reactant materials to the at least one more compartment , all compartments intercommunicating with each other (iv), stirring the materials in all compartments, and (vi) withdrawing the liquid reaction products from at least one compartment of the reactor system,
**characterized by**
the reactant material comprising in each case an alkali metal hydroxide, reactants flowing by gravity through downcomers into said
at least one more compartment and the process comprising additionally withdrawing vapor reaction products from the compartments through vapor outlet nozzles.

The invention includes also
a process for the continuous preparation of a liquid epoxy resin, the process including (i) introducing epihalohydrin and an active hydrogen-containing species into a top compartment of a vertical reactor system, (ii) stirring the materials in the initial compartment, (iii) flowing the reaction product into a next adjacent compartment of the reactor system, (v) flowing reaction product from said next adjacent compartment to one or more additional reaction compartments of the reaction system, and withdrawing reaction products from the last compartments of the reactor system, characterized by
step (i) comprising the addition of alkali metal hydroxide, in step (ii) the materials reacting to form as a reaction product a glycidyl ether of the active hydrogen-containing species, in step (iii) the reaction product flowing by gravity through downcomers into said at least one more compartment, the process including furthermore
(iv) adding additional alkali metal hydroxide to said next adjacent compartment and stirring the materials therein,
(vi) introducing a solvent into the vertical reactor system, removing by-product water from reactions in the compartments in a codistillate of the solvent and the by-product water from the compartments through vapor outlet nozzles .

Another embodiment provides
a process for the continuous preparation of a liquid epoxy resin in a multiple-intercommunicating-compartment continuous vertical reactor system, the process comprising (i) introducing a 10:1 molar ratio mixture of epichlorohydrin and bisphenol A to a first compartment, (iii) liquid reaction product flowing from one compartment to a next adjacent compartment and thus through all
compartments, (vii)
withdrawing a liquid epoxy resin product from the last compartment, characterized by
step (i) comprising furthermore introducing a stream of glycol monoether solvent along with said mixture in step (iii) the liquid reaction product flowing by gravity through downcomers into
the next adjacent compartment and the process comprising furthermore
(ii) feeding aqueous sodium hydroxide into each of the compartments of the system
except to a last compartment, (iv) maintaining pressure in the system at about 21998 Pa (165 mm Hg), (v) maintaining temperature in the system at about 65°C, (vi) controlling the water concentration in the system at less than 0,3 weight percent, and (iix) keeping the total residence time of reactants in the compartments between 100 and 500 minutes.

An organic co-solvent may be added to enhance the solubility of the alkali salt of the active hydrogen containing species in the organic phase. By-product water formed in the reaction is co-distilled with solvent and a co-distillate (of for example, epichlorohydrin, solvent and water) is removed to maintain a desired concentration of water in the compartment. The feed rate of the epihalohydrin and active hydrogen-containing species and the compartment size affect the extent of the reaction, that is, the residence time.

The liquid product from the initial compartment overflows a weir into the next adjacent compartment. Additional alkali hydroxide is added to this compartment and further reaction occurs. Additional reaction compartments are used to insure sufficient time for the reaction of the hydroxide. These additional compartments, or "digestion stages" need not have any catalyst added into them and the residence time in the additional digestion stages may be varied depending on the desired conversion of product being produced.

In one embodiment, using the horizontal reactor, vapor may be removed from any or all compartments simultaneously since there is a common space above all the compartments in communication with each other compartment. In another embodiment, using the horizontal reactor, stirrers can be provided in any or all compartments, and in one specific embodiment stirrers are provided in each compartment. In embodiments with multiple stirrers, each stirrer may have an individual shaft and motor or two or more stirrers can be disposed on one shaft, driven by one motor. By-product water removal minimizes yield losses to unwanted side reactions as does the co-addition of catalyst and reactant alkali hydroxide. Undesirable by-products of a reaction can be removed in the vapor phase so that subsequent removal from the liquid product or effluent is not required. Alternatively, in a process according to the present invention in which the desired reaction product is removed in the vapor phase, undesirable by-products are removable in the liquid effluent. In liquid epoxy resin processes according to the present invention the staged addition of a suitable solvent (for example, but not limited to, the product itself, for example, epichlorohydrin) and of additional aqueous hydroxide with the immediate removal of water through azeotropic distillation with the solvent minimizes the possibility of reaction with the epichlorohydrin, reducing the amount of undesirable hydrolysis products. In another embodiment, using the horizontal reactor, underflow weirs may be employed in one or more compartments with vapor removal therefrom to permit control of vapor composition.

In another embodiment of the present invention, a vertical continuous flow-through reactor system is used with a plurality of compartments one on top of the other. Reactants flow into a first compartment, where reaction is initiated, then by gravity through downcomers into intermediate compartments. Additional reactants or catalysts or both may be added to any or all of the intermediate compartments. The reaction may be allowed to proceed in the intermediate compartments without the addition of more reactants to insure complete reaction of the reactants. Liquid epoxy resins are discharged or withdrawn from a bottom compartment.

In one embodiment, using the vertical reactor, epihalohydrin and an active hydrogen-containing species are fed into an initial compartment and reacted with an alkali hydroxide to form a glycidyl ether of the active hydrogen-containing species. An organic co-solvent may be added to enhance the solubility of the alkali salt of the active hydrogen-containing species in the organic phase. By-product water formed in the reaction is co-distilled with solvent and a co-distillate (of for example, epichlorohydrin, solvent and water) is removed to maintain a desired concentration of water in the compartment. The feed rate of the epihalohydrin and active hydrogen-containing species and the compartment size affect the extent of the reaction, that is, the residence time.

Additional alkali hydroxide can be added to compartments below the top compartment for further reaction. Additional compartments are used to insure sufficient time for the reaction of the hydroxide. These additional compartments, or "digestion stages" need not have any catalyst added into them and the residence time in the additional digestion stages may be varied depending on the desired conversion of product being produced.

Vapor or by-products may be removed from any or all compartments simultaneously by appropriate nozzles and outlets. Mixing impellers can be provided in any one of the compartments, and in one embodiment, mixing impellers are provided in each compartment. By-product and water removal minimize yield losses to unwanted side reactions as does the
co-addition of catalyst and reactant alkali hydroxide.

In the vertical reactor, in order to prevent liquid leaking between stages, a liquid tight seal may be used around the stirring shaft. This liquid seal may also be a bearing or bushing for shaft support. One problem with this type of seal in epoxy resin manufacture is the abrasive nature of the by-product salt. With this type of seal, the salt will migrate into the space between the shaft and bushing or bearing and erode one of the mating surfaces. The erosion will, with time, cause leakage between compartments and destroy the reaction residence time on the affected stage. One method for eliminating this erosion problem is to elevate the seal above the liquid by means of a stand pipe. In one embodiment of the vertical reactor, it is preferred that the height of the stand pipes be greater than the height of the downcomers carrying the liquid phase to the next lower reaction stage.

An advantage of the process of the present invention is the possibility that vapor containing reaction products or by-products may be removed from some or all of the compartments, simultaneously if desired.

Another advantage of the process of the present invention is that catalyst and reactants can be added in a staged manner to minimize yield losses.

A further advantage of the process of the present invention is that additional digestion stages are provided to insure sufficient time for the reaction, the residence times in these stages is variable as desired.

The present invention recognizes and addresses the previously mentioned long-felt needs and provides a satisfactory meeting of those needs in its various possible embodiments. To one of skill in this art who has the benefits of this invention's teachings and disclosures, other advantages will be clear, as well as others inherent therein, from the following description of presently preferred embodiments, given for the purpose of disclosure, when taken in conjunction with the accompanying drawings. Although these descriptions are detailed to insure adequacy and aid understanding, this is not intended to prejudice that purpose of a patent which is to claim an invention no matter how others may later disguise it by variations in form or additions or further improvements.

So that the manner in which the above-recited features, advantages and objects of the invention, as well as others which will become clear, are attained and can be understood in detail, more particular description of the invention briefly summarized above may be had by reference to certain embodiments thereof which are illustrated in the appended drawings, which drawings form a part of this specification. It is to be noted, however, that the appended drawings illustrate preferred embodiments of the invention and are therefore not to be considered limiting of its scope, for the invention may admit to other equally effective equivalent embodiments.

Figure 1 is a side schematic view in cross-section of a horizontal reactor system to be used according to the present invention.

Figures 2 and 3 are cross-section views of a horizontal reactor also showing front views of a baffle plate mounted in the horizontal reactor to be used according to the present invention.

Figure 4 is a front view of an inlet flange for the system of Figure 1.

Figure 5 is a side view of the flange of Figure 4.

Figure 6 is a front view of an outlet flange for the system of Figure 1.

Figure 7 is a side view of the flange of Figure 6.

Figure 8 is a side schematic view of a horizontal reactor system to be used according to the present invention.

Figure 9 is a side view of a horizontal reactor system to be used according to the present invention.

Figure 10 is a side view opposite to that of Figure 9.

Figure 11 is an end view of the system of Figure 9.

Figure 12 is a side schematic view, partially in cross-section of a vertical reactor system to be used according to the present invention.

Figure 13 is a view along line 13-13 of Figure 1.

Figure 14 is a schematic view of flow in a vertical apparatus.

Figure 15 is a schematic view of flow in a vertical apparatus.

Figures 16 and 17 are side views of downcomers.

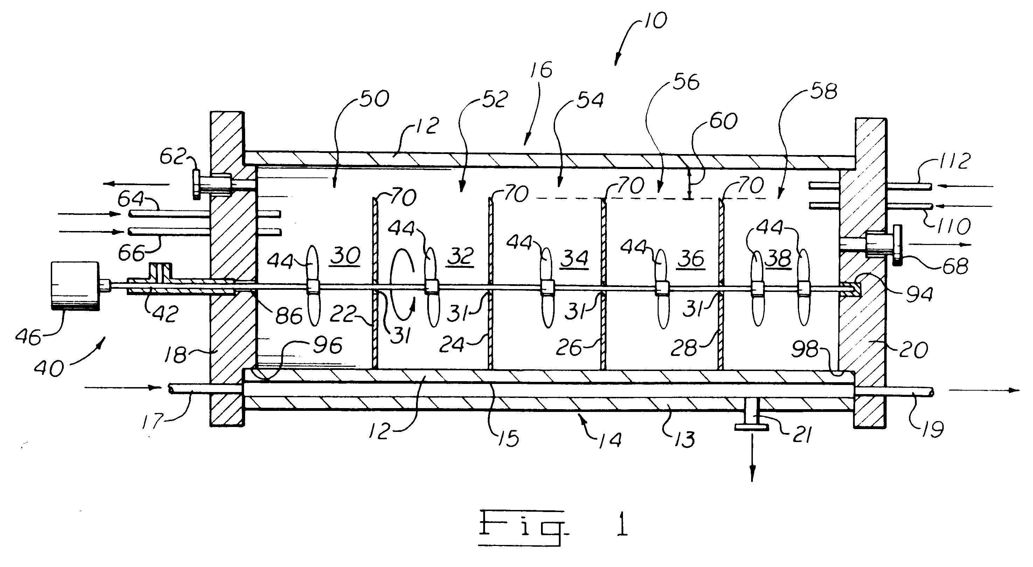

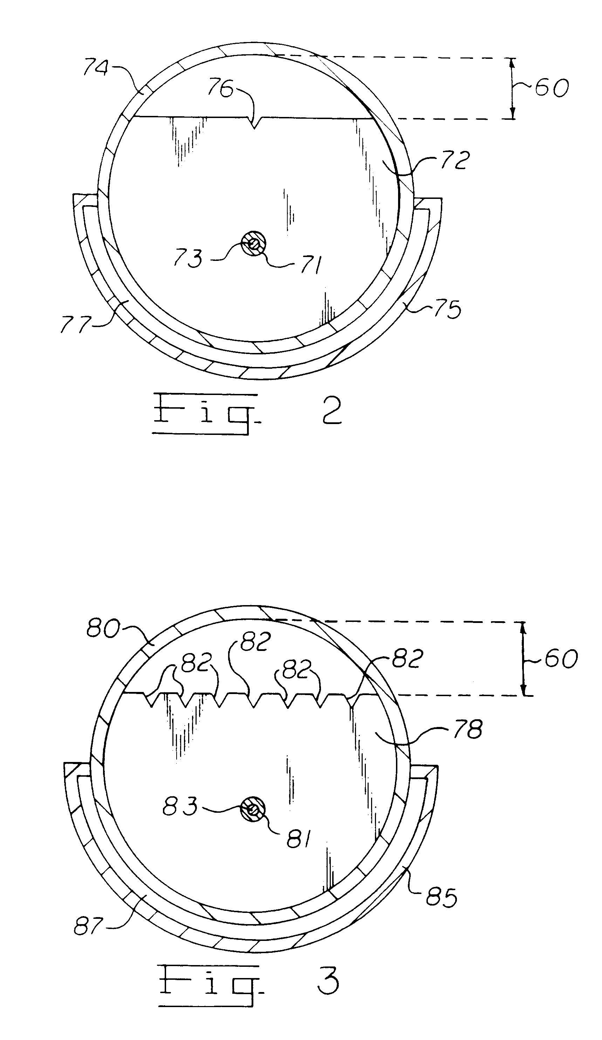

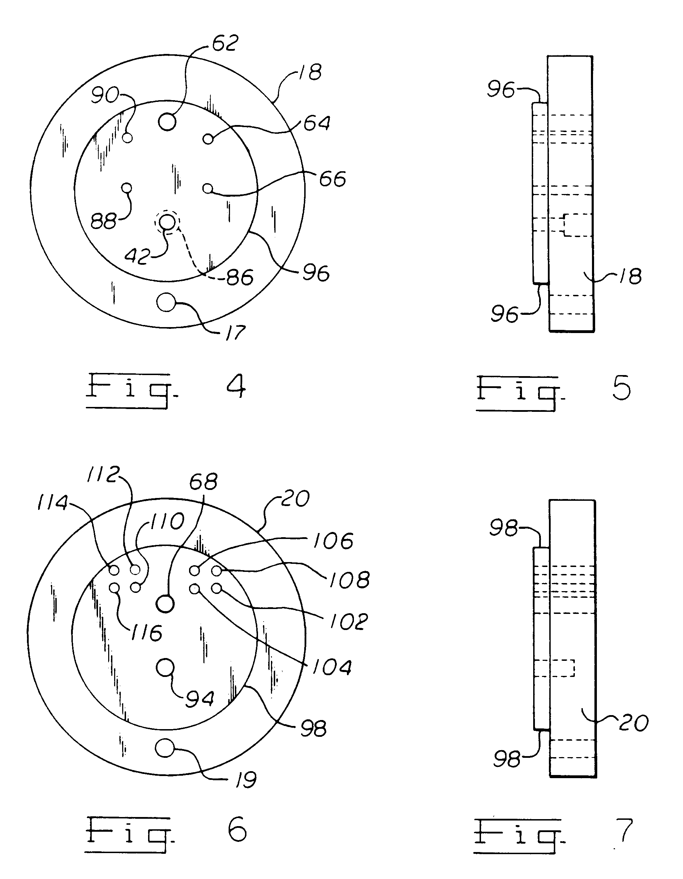

As shown in Figure 1, a reactor system 10 used for the process of the present invention has a generally horizontal multi-compartment cylindrical glass vessel 12 having a bottom 14, a top 16, an inlet flange 18 and an outlet flange 20. The flanges, 18 and 20, and multiple baffle plates 22, 24, 26 and 28 define the various compartments 30, 32, 34, 36 and 38, respectively, and serve as overflow weirs between compartments. These members are preferably made from glass-filled polytetrafluoroethylene (PTFE) [(Teflon™ (a trademark of E. I. du Pont de Nemours & Company) material)] and are joined together by a silicone based adhesive (for example, Silastic™ (a trademark of Dow Corning Corporation) adhesive). It is possible to provide a vessel with two or more compartments. The inlet flange 18 has an interior recessed edge 96 and the outlet flange 20 has an interior recessed edge 98 for facilitating the mounting of the vessel 12.

A stirring mechanism 40 includes a motor 46 which turns a shaft 42 which extends from and through the inlet flange 18 and into each compartment through holes with bushings 31 in the baffle plates. Stirring agitators 44 are secured to the shaft 42 rotated by the motor 46. The shaft 42 extends into and is supported by a stirring shaft support sleeve 94 in the flange 20 and a shaft support sleeve 86 in the flange 18. As shown, the final compartment 38 has two stirring devices 44. Two stirring devices 44 are advantageous in this compartment 38 because the stirring devices help handle large salt concentrations; that is, it is desirous to keep by-products salts suspended in liquid in the compartments.

Each of the other compartments 30, 32, 34 and 36 has one stirring device 44. Of course it is possible to provide a compartment without a stirrer or to provide multiple stirrers in each compartment. Also, although propeller-type stirrers are shown, it is possible to utilize any appropriate conventional stirring device. Individual stirrers for individual compartments each with its own shaft and motor may be provided.

Spaces 50, 52, 54, 56 and 58 above the compartments 30, 32, 34, 36, and 38, respectively, are each in communication with a space 60 in the top portion of the vessel 12. Gases and vapors with by-products from the reaction in any of the compartments can be drawn off through the space 60 through a discharge opening 62 in inlet flange 18. A vacuum pump, not shown, can be used to facilitate the withdrawal of material through vapor discharge opening 62.

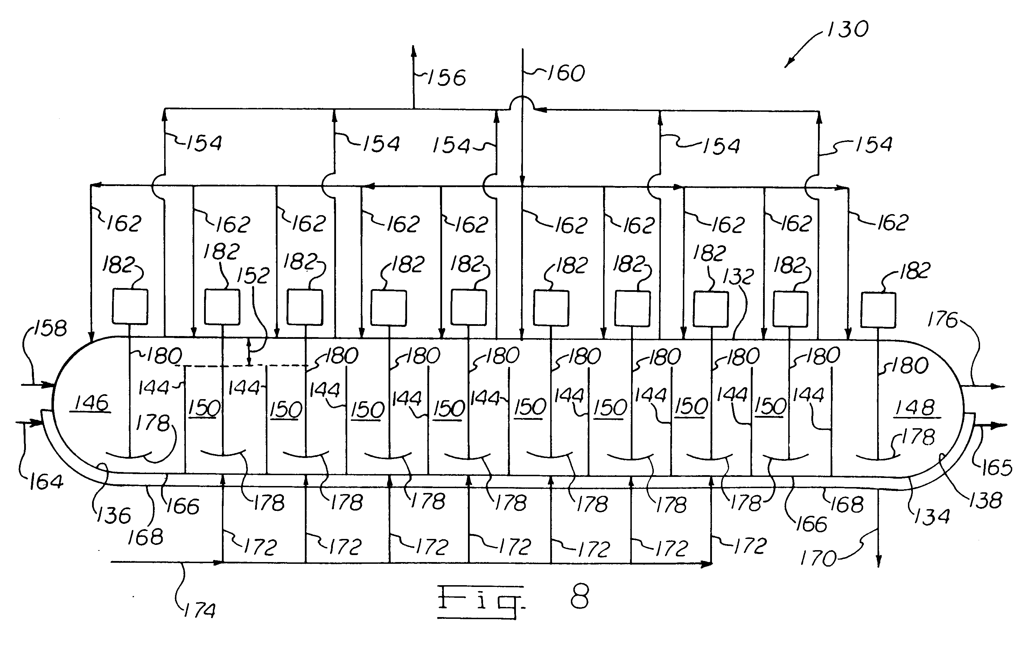

Reactants are fed into initial compartment 30 through feed lines through inlet opening 66 in inlet flange 18. Catalyst is fed into compartment 30 through feed lines through inlet opening 90 (Figure 4) in inlet flange 18. The resulting product is withdrawn from a product outlet 68 in the outlet flange 20. Caustic feeds (for example, alkali hydroxides) may be introduced into the vessel 12 through feed lines through a caustic feed inlet, for example, 110 in the outlet flange 20. Recycled azeotropes [for example, from unreacted epichlorohydrin; co-solvents (if employed); or water] may be fed back into the vessel through lines through the liquid return inlet 64.

The reactor system 10 used for the process of the present invention may contain any means for heating the compartments of the system for carrying out the reactions in the compartments. In the embodiment shown in Figure 1, steam via feed line 17 and steam outlet line 19 provides heat for reaction in each compartment. The steam flows between an outer surface 15 of the vessel 12 and a vessel jacket 13. Cooled condensate flows out through a drain 21.

Alternatively, the steam jacket 13 may be replaced with an infrared heat lamp such that the vessel 12 may also be heated with the infrared heat lamps to achieve a desired temperature within the reactor vessel.

As shown schematically in Figure 1 catalyst may be introduced to each of the compartments 30, 32, 34, 36 and 38 through catalysts inlets 90, 110, 112, 114, and 116 (Figure 4), respectively, through feed lines (not shown) to each compartment. Thermocouples 88, 102, 104, 106, 108 (Figures 4 and 6) are used to measure the temperatures in the compartments for control of enthalpy addition or removal and extend into the liquid phase in each compartment. It is preferred that the baffle plates have a top knife edge 70 as shown in Figure 1 to facilitate smooth flow of liquids and so that no flat surface is provided on which salts might be deposited.

Figures 2 and 3 show front views of preferred baffle plates for a horizontal reactor. In Figure 2 a baffle plate 72 (for example, similar to previously-described baffle plate 22) is a Teflon™ PTFE material plate about 3/8 inch (9.5 mm) thick mounted in a vessel 74, (like vessel 12). Vessel 74 contains a steam vessel jacket 75 forming a space 77 for flowing steam therethrough. A hole 71 is provided in baffle 72 for accommodating a rotatable shaft 73 for rotating a stirring means such as an impeller, paddle or agitator (not shown). The plate 72 has a single central "V" notch 76. Such a notch is advantageous because the velocity of the reaction mixture is increased at the notch to minimize the formation of a solid salt dam.

As shown in Figure 3, a baffle plate 78 in a vessel 80 may have a plurality of notches 82. This is advantageous because at higher liquid flow rates a plurality of notches will increase the reactor liquid volume above that provided by a single large "V" notch. The vessel 80 contains a steam vessel jacket 85 forming a space 87 for flowing stream therethrough. A hole with bushing 81 is provided in baffle 78 for accommodating a rotatable shaft 83 for rotating a stirring means (not shown).

Figures 4, 5, 6, and 7 show the various lines, inlets, and outlets for the inlet flange 18 and the outlet flange 20 of the vessel 12 of Figure 1. As shown in Figures 4 and 5, the inlet flange 18 with its recessed edge 96 has: vapor outlet line, 62; thermocouple line, 88; catalyst inlet line, 90; feed mixture inlet, 66; liquid return inlet, 64; bearing sleeve, 86 and steam inlet 17.

As shown in Figures 6 and 7, the outlet flange 20 with its recessed edge 98 has: catalysts inlets, 110, 112, 114 and 116; thermocouple lines, 102, 104, 106 and 108 product outlet line, 68; shaft support sleeve, 94 and steam outlet 19.

Figure 8 illustrates schematically another embodiment of a reactor system for the process of the present invention. A horizontal reactor system 130 has a generally cylindrical vessel 132 having a side wall 134 and end heads 136 and 138. Baffle plates 144 define end compartments 146 and 148 and intermediate compartments 150. Each compartment opens to a common overhead space 152 in the vessel 132.

Vapor generated in the compartments flows into the space 152 and exits the vessel 132 through vapor outlets 154 which flow to common outlet 156. Initial liquid reactant feed flows into compartment 146 through feed line 158. Liquid return [from an overhead phase separation system (not shown) which separates undesired water from the organic solvent system] flows into each compartment through a main liquid return line 160 which feeds the subordinate liquid return lines 162 flowing into each compartment.

Steam via feed line 164 provides heat for reaction in each compartment. The steam flows between an outer surface 166 of the vessel 132 and a vessel jacket 168 and any excess steam exits outlet 165. Cooled condensate flows out through a drain 170.

Catalyst is fed into each compartment through catalyst feed lines 172 which are in turn fed through a main catalyst feed line 174. Product is removed through a product outlet line 176 extending from the compartment 148.

Each compartment has a stirrer with a blade 178 secured to a shaft 180 which is turned by a motor 182 on top of the vessel 132. The blades 178 as shown induce an axial flow component into liquids in the compartments. Such a flow is advantageous because it reduces splashing at the vapor/liquid interface in the compartments that could result in increased salt deposits on the tops of the baffle plates.

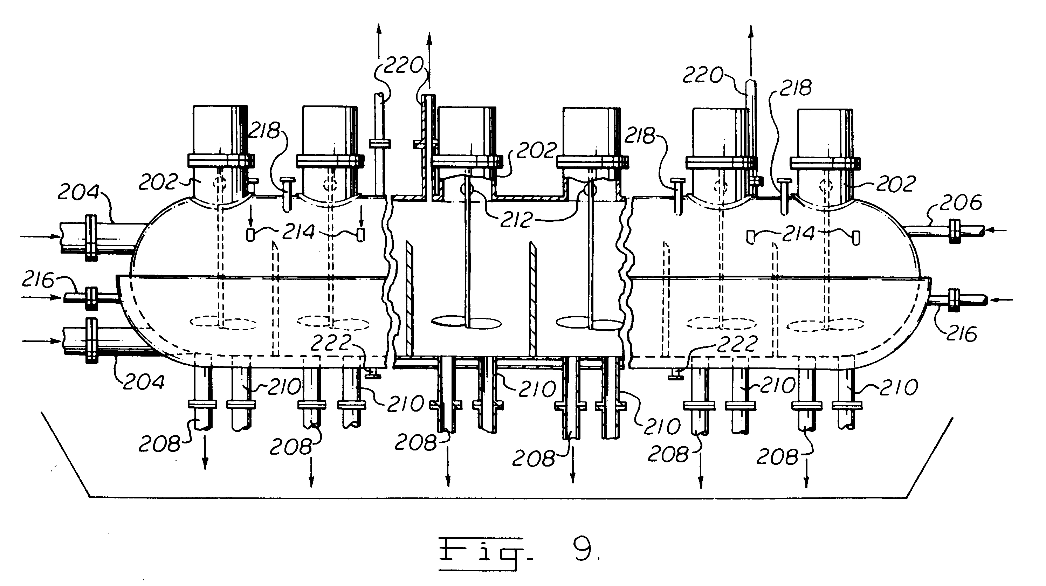

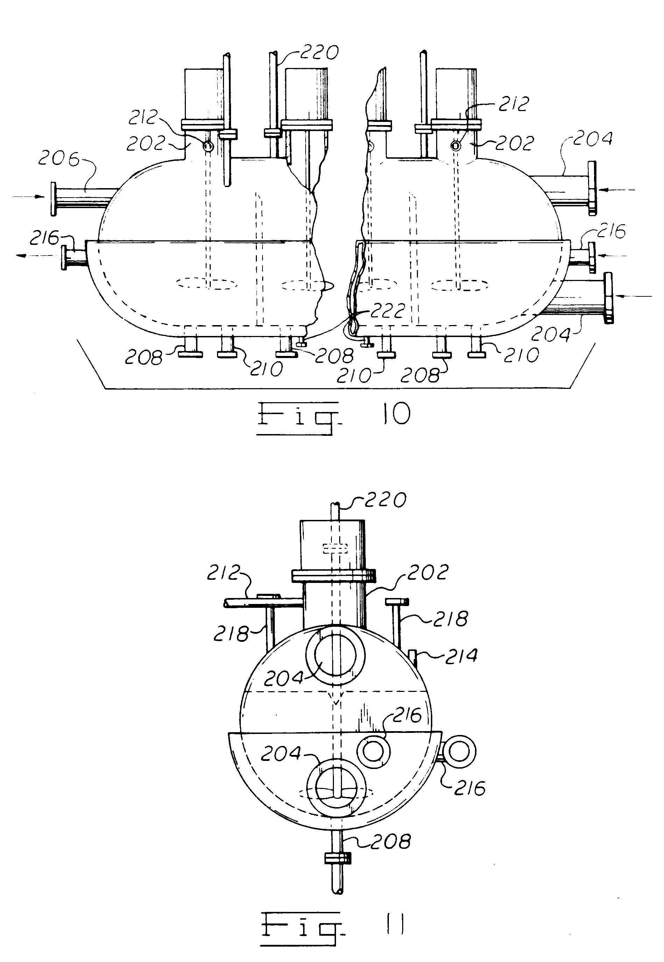

Figures 9, 10, and 11 illustrate various exterior views of a horizontal reactor system. The various inlets, outlets and nozzles are as follows: mounting flanges for stirring mechanisms 202; mountings for liquid level sensing instrumentation 204; feed mixture inlet nozzle, 206; products outlet and compartment drains, 208; samples ports for each compartment, 210; catalyst inlet nozzles, 212; liquid return from phase separation system, 214; steam inlet to jacket, 216; thermocouple mounting flanges, 218; vapor outlet nozzles 220 and condensate drains 222.

In one embodiment of a process according to the present invention a reactor such as that of Figure 1 or Figure 8 is employed to produce epichlorohydrin in the vapor phase from each compartment with the liquid stream containing effluent brine.

A horizontal reactor may be used in processes for producing liquid epoxy resins in which: the preferred temperatures range between 40°C and 100°C; with pressures ranging between (50 mm Hg) 6,665 Pa and atmospheric pressure [(760 mm Hg) 101,308 Pa ]; water concentrations ranging between 0.2 weight percent and 6 weight percent, but in all cases below the saturation limit of the liquid phase in the reactor, with an amount equal to or less than 4 percent preferred; the preferred catalysts are sodium hydroxide and potassium hydroxide; and bisphenol conversion rates ranging between 50 percent (for example, for producing high molecular weight, low chloride content epoxy resins) and up to almost 100 percent, and most preferably equal to or greater than about 98 percent.

Vapor weirs or baffles with a portion submerged in the liquid could be used to allow removal of vapors different compositions. Such underflow weirs permit control of the composition of vapor in the compartments.

It is within the scope of the present invention to produce epihalohydrins from the reaction of sodium hydroxide with 1,3-dihalo-2-propanol, 2,3-dihalo-1-propanol, 3-halo-1,2-propanediol and mixtures thereof to form epihalohydrins or 2,3 epoxy-1-propanol (glycidol). The desired products are removed from the apparatus via azeotropic or co-distillation as a vapor from the reactor.

In Figure 12, there is shown another embodiment of the reactor system. Figure 12 shows a vertical reactor system generally indicated by numeral 310. The vertical reactor system 310 has a vessel 312 secured to support flange 408, the vessel having a top feed inlet 320 for introducing reactant materials and a bottom discharge 318 for withdrawing products of the reaction of the reactant materials. The bottom head of the vessel is indicated by numeral 414 and she top head by 416.

A plurality of reaction compartments are substantially vertically aligned one on top of the other in the vessel 312, including a top compartment 314, a bottom compartment 316, and any number of intermediate compartments such as compartments 322, 324, 326, and 328. Each compartment is defined by the sides of the vessel 312 and stage plates 362 and has a downcomer through which materials flow into the next adjacent lower compartment, including downcomers 514 (for flow from the top compartment 314 to the next lower adjacent compartment 322); downcomers 342, 344, 346 and 348; and downcomer 516 in the bottom compartment 316 through which materials including reaction products flow into a collection area 420 for discharge through bottom discharge 318.

Any compartment may have an impeller for facilitating reactant material mixing and the reaction of reactant materials to produce reaction products; but it is preferred that each compartment have a mixing impeller. As shown in Figure 12, each compartment has an impeller 370 mounted on a common shaft 368 which extends through the vessel 312 from top to bottom and has its bottom end housed in a bearing 374. A stirring motor 366 mounted on the top of the vessel 312 is connected to and rotates the shaft 368 and its connected impellers 370. The impellers 370 induce a radial component to the flow of materials in the compartments as shown in Figure 14 in compartment 328. Such flow is desired because it has a velocity component directed through required cooling/heating coils to enhance transfer of heat and rapidly disperse catalyst or reactants.

For various other types of processes, different stirrers or impellers may be preferable; for example, in a process in which high shear and high emulsification is desired a turbine impeller may be used and in a process that is shear sensitive a marine impeller may be used.

Any compartment may have a vapor outlet nozzle, but it is preferred, as shown in Figure 12 that each compartment have a vapor outlet nozzle 410. Vapor and vapor-containing reaction products, by-products, or sub-products can be withdrawn through the vapor outlet nozzles on each compartment.

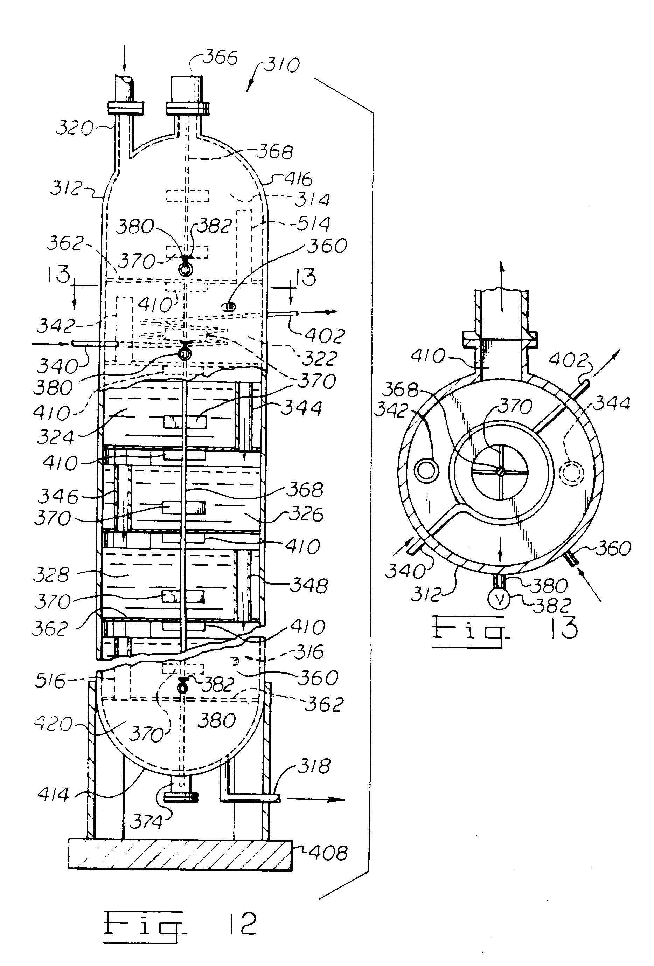

As shown in Figure 13 each compartment may have (and it is preferred that every compartment have) a vapor outlet 410 (one shown for compartment 322); a steam inlet 340 and a steam outlet 402 (one each shown for compartment 322); a drain 380 and a drain valve 382 (one shown for compartment 322); and an additional reactant or catalyst feed inlet 360 (one shown for compartment 322). The drains 380 may serve as sample points.

The reactor system 310 is used to produce liquid epoxy resins and: epihalohydrins, for example, from the reaction between 1,3-dihalo-2-propanol and/or 2, 3-dihalo-1-propanol and sodium hydroxide (the epihalohydrin being removed in vapor). Reactant materials, for example, an excess of epihalohydrin and an active hydrogen-containing species (for example, bisphenol A) are fed into the top compartment 314 through top feed inlet 320. Through an additional reactant feed inlet 360, catalyst and an alkali hydroxide (for example, NaOH) is fed into the compartment. In the ensuing reaction, a glycidyl ether of the active hydrogen-containing species is formed along with various by-products and sub-products including water and alkali salts.

The liquid reaction products, for example, the liquid epoxy resin, reach a liquid level at the top of the downcomer 514 and flow by gravity through the downcomer 514 into the compartment 322 beneath the compartment 314.

The extent of the reaction in the compartments (that is, the residence time) is affected by reactant feed rate, catalyst feed rate, downcomer height, and compartment size.

In order to reduce the possibility of solid salt accumulating around the top rim of the downcomer forming a dam which will retard the flow, a notch is provided in the downcomer rim to increase the flow velocity of the resin salt, and solvent mixture. If the product rates are increased, then rather than deepening the notch, a multiple number of notches are provided. These notches are illustrated in Figures 16 and 17. As shown in Figure 16, a downcomer 600 has a body 602 with a notch 604 in the top edge thereof. As shown in Figure 17, a downcomer 610 has a body 612 with notches 614 in the top edge thereof.

To enhance the solubility of an alkali salt by-product of the active hydrogen containing species in the organic phase, an organic co-solvent (for example, secondary alcohols, diethers and other organics) may be used, introduced into the vessel with the reactant feed. By-product water formed in the reaction is co-distilled with this solvent and removed via the outlets 410 to maintain the desired concentration of water in the compartments. Additional reactants, catalyst (for example, NaOH), or both can be fed through the additional reactant or catalyst inlet 360 in each compartment. For example, in one process according to the present invention a process is provided for the continuous preparation of liquid epoxy resins which includes contacting bisphenol A, epichlorohydrin and sodium hydroxide in a top compartment of a vertical reactor system as described herein; flowing reaction product and by-products of reaction of the bisphenol A, epichlorohydrin, and sodium hydroxide from the top compartment to at least one more compartment and adding additional sodium hydroxide (or sodium hydroxide and either bisphenol A, epichlorohydrin or both) to the one more compartment; agitating the reactant materials in the compartments with an impeller rotatably mounted in the at least one more compartment; (in one embodiment the impeller inducing radial flow of the reactant materials); introducing a solvent into the system and removing by-product water from each compartment in a cc-distillate; of the epichlorohydrin, solvent and water; withdrawing vapor reaction products from each of the compartments; and withdrawing diglycidyl ethers of dihydric phenols from a lower portion of the reactor system.

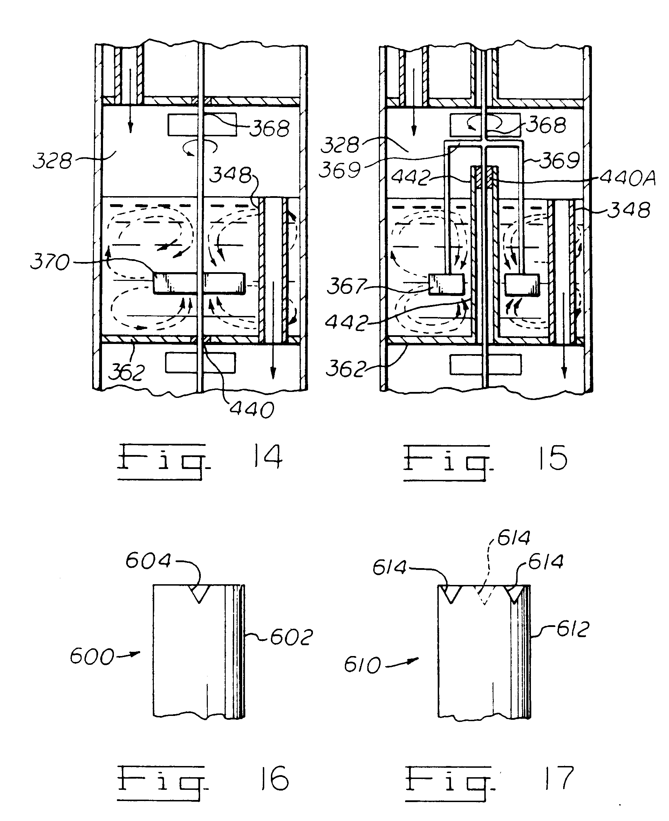

As shown in Figure 14 mixing lines for the radial flow impeller 370 (shown by arrows) indicate circulation in the intermediate compartment 328. The shaft 368 has a liquid seal 440 which minimizes leakage between adjacent compartments. As shown in Figure 15, a preferred liquid seal 440A is elevated above the liquid contents of the compartment 328 and above the top edge of the downcomer 348. An elevated stand pipe 442 serves as a mount for the seal 440A and also isolates the shaft 368 from the compartment's liquid contents. The stand pipe 442 which is secured to the stage plate 362 can be either open or sealed. To accommodate the liquid seal 440A, a support 369 extends from and is secured to the shaft 368 to which are connected impeller blades 367 which rotate without contacting the stand pipe 442 creating a liquid circulation pattern (shown by arrows) like that in Figure 14.

"Digestion stages" - compartments into which no additional reactants are fed - may be employed to insure that all the alkali hydroxide has been reacted. Residence time in the digestion stages may be varied as desired. The co-addition of catalyst and reactant alkali hydroxide in a stage manner helps to minimize yield losses to unwanted side reactions, as does by-product water removed in the vapors.

A vertical reactor may be used in processes for producing liquid epoxy resins in which: the preferred temperatures range between 40°C and 100°C; with pressures ranges between (50 mm Hg) 6,665 Pa and atmospheric pressure; water concentrations ranging between 0.2 weight percent and 6 weight percent (which is below the saturation limit of the liquid phase in the reactor), with an amount equal to or less than 2 percent preferred; and bisphenol conversion rates ranging between 50 percent (for example, for producing high molecular weight, low chloride content epoxy resins) and up to almost 100 percent.

In conclusion, therefore, it is seen that the present invention and the embodiments disclosed herein are well adapted to carry out the objectives and obtained the ends set forth at the outset. Certain changes can be made in the processes and apparatuses without departing from the spirit and the scope of this invention. It is realized that changes are possible and it is further intended that each element or step recited in any of the following claims is to be understood as referring to all equivalent elements or steps for accomplishing substantially the same results in substantially the same or equivalent manner. It is intended to cover the invention broadly in whatever form its principles may be utilized. The present invention is, therefore, well adapted to carry out the objects and obtain the ends and advantages mentioned, as well as other inherent therein.

### Example 1

A five-compartment horizontal reactor system, similar to the reactor shown in Figure 1, had its first four compartments as reaction stages and the final compartment as a digestion stage (no catalyst added).

Forty-four point four (44.4) mℓ/minute of a 10:1 molar ratio mixture of epichlorohydrin and bisphenol A were fed to the first stage of the reactor. A 23.6 mℓ/minute stream of DOWANOL* (trademark of the Dow Chemical Company) PM (a glycol monoether solvent) was simultaneously fed to the first reactor stage. One point two (1.2) mℓ/minute of a 50 weight percent aqueous sodium hydroxide solution was fed to each of the four reaction stages. The reactor was operated at about (165 mm Hg) 21,994 Pa pressure and about 65°C. At these operating conditions, the water concentration in the reactor was controlled at less than 1.3 weight percent. The product of this reaction was a liquid epoxy resin containing 200 ppm of hydrolyzable chlorides with a bisphenol A conversion of 99.85 percent and an epichlorohydrin yield of 96 percent (losses to undesirable non-recycled by-products were 4 percent of the epichlorohydrin fed into the reactor). The ratio of equivalents of sodium hydroxide to equivalents of bisphenol A was 1.001. The total residence time was 110 minutes.

The water concentration was controlled at less than 1.3 weight percent since the vapor liquid equilibria of the solvent system at reaction temperature and pressure define the composition of both liquid and vapor phases in the reactor compartments.

Residence time per compartment 22 minutes; total time in the compartments was 110 minutes. For this reaction and this system it is preferred: that total residence time range between 100 and 500 minutes, with 100 to 150 minutes most preferred; and that the system have between five to ten compartments.

### Example 2

The reactor system of Example 1 was used. Forty-six point three (46.3) mℓ/minute of a 10:1 molar ratio mixture of epichlorohydrin and bisphenol A and 25 mℓ/minute of DOWANOL PM were fed to the first stage of the horizontal reactor. One point three (1.3) mL/minute of a 50 weight percent aqueous sodium hydroxide solution was fed to each of the four reaction stages. The reactor was operated at about (165 mm Hg) 21,994 Pa pressure and a temperature of about 65°C. The water concentration was controlled at less than 1.3 weight percent. The product of this reaction was a bisphenol A conversion of 99.5 percent and an epichlorohydrin yield of 98 percent. The equivalence ratio of sodium hydroxide to bisphenol A was 1.07. The total residence time was 105 minutes.

The residence time per compartment was 21 minutes.

## Claims

1. A process for the continuous preparation of reaction products from the reaction of liquid reactant materials wherein said liquid reactant materials comprise either: epihalohydrin and active hydrogen-containing species; 1,3-dihalo-2-propanol or 2,3-dihalo-1-propanol or mixtures thereof, the process comprising (i) contacting the reactant materials for producing the reaction products in a first compartment (30, 146) of a reactor system (10, 130); (ii) stirring the materials therein, (iii) flowing reaction products and by-products from the first compartment (30, 146) of the reactant system to at least one more compartment (32, 34, 36, 148, 150) of the reactor system (10, 130) and (iiia) adding additional reactant materials to the at least one more compartment (32, 34, 36, 38, 148, 150), all compartments (32, 34, 36, 38, 148, 150) intercommunicating with each other (iv), stirring the materials in all compartments, and (vi) withdrawing the liquid reaction products from at least one compartment of the reactor system,
**characterized by**
the reactant material comprising in each case an alkali metal hydroxide, the reactor system being horizontally aligned and the process comprising additionally withdrawing vapor reaction products from the compartments from a common space (60, 152) above them.

2. The process according to claim 1 wherein the active-hydrogen-containing species is bisphenol A.

3. A process for the continuous preparation of a liquid epoxy resin, the process including (i) introducing epihalohydrin and an active hydrogen-containing species into an initial compartment (30, 146) of a reactor system (10, 130), (ii) stirring the materials in the initial compartment (30, 146), (iii) flowing the reaction product over a weir (18, 20, 22, 24, 26, 28, 72, 78, 144) into a next adjacent compartment (32, 34, 36, 38, 148, 150) of the reactor system, (v) flowing reaction product from said next adjacent compartment to one or more additional reaction compartments (32, 34, 36, 38, 148, 150) of the reaction system (10, 130), and withdrawing reaction products from the last compartments (32, 34, 36, 38, 148) of the reactor system,
**characterized by**
the reactor (10, 130) being horizontally aligned, step (i) comprising the addition of alkali metal hydroxide, in step (ii) the materials reacting to form as a reaction product a glycidyl derivative of the active hydrogen-containing species, the process including furthermore
(iv) adding additional alkali metal hydroxide to said next adjacent compartment and stirring the materials therein,
(vi) introducing a solvent into the horizontal reactor system, removing by-product water from reactions in the compartments in a codistillate of the solvent and the by-product water from a common space (60, 152) above the compartments with which each compartment communicates.

4. A process for the continuous preparation of a liquid epoxy resin in a multiple-intercommunicating-compartment continuous reactor system (10, 130), each compartment (30, 32, 34, 36, 38, 146, 148, 150) communicating with a common overhead space (60, 152) within the system, the process comprising (i) introducing a 10:1 molar ratio mixture of epichlorohydrin and bisphenol A to a first compartment (30, 146), (iii) liquid reaction product flowing from one compartment (30, 146) to a next adjacent compartment (32, 34, 36, 38, 148, 150) and thus through all compartments (30, 32, 34, 36, 38, 146, 148, 150), (vii) withdrawing a liquid epoxy resin product from the last compartment (38, 148),
**characterized by**
the reactor system being horizontally aligned, step (i) comprising furthermore introducing a stream of glycol monoether solvent along with said mixture and the process comprising furthermore
(ii) feeding aqueous sodium hydroxide into each of the compartments (30, 32, 34, 36, 146, 150) of the system (10, 130) except to a last compartment (38, 148), (iv) maintaining pressure in the system at about 22 kPa (165 mm Hg),
(v) maintaining temperature in the system at about 65°C, (vi) controlling the water concentration in the system at less than 0.3 weight percent, and (iix) keeping the total residence time of reactants in the compartments between 100 and 500 minutes.

5. A process for the continuous preparation of reaction products from the reaction of liquid reactant materials wherein said liquid reactant materials comprise either: epihalohydrin and an active hydrogen-containing species; 1,3-dihalo-2-propanol or 2,3-dihalo-1-propanol or mixtures thereof, the process comprising (i) contacting the reactant materials for producing the reaction products in a first compartment (314) of a vertical reactor system (310); (ii) stirring the materials therein, (iii) flowing reaction products and by-products from the first compartment (314) of the reactant system to at least one more compartment (322, 324, 326, 328) of the reactor system (310) and (iiia) adding additional reactant materials to the at least one more compartment (322, 324, 326, 328), all compartments (314, 316, 322, 324, 326, 328) intercommunicating with each other (iv), stirring the materials in all compartments, and (vi) withdrawing the liquid reaction products from at least one compartment of the reactor system,
**characterized by**
the reactant material comprising in each case an alkali metal hydroxide, reactants flowing by gravity through downcomers (342, 344, 346, 514, 516) into said at least one more compartment and the process comprising additionally withdrawing vapor reaction products from the compartments through vapor outlet nozzles (410).

6. The process according to claim 5, wherein the active-hydrogen-containing species is bisphenol A.

7. A process for the continuous preparation of a liquid epoxy resin, the process including (i) introducing epihalohydrin and an active hydrogen-containing species into a top compartment (314) of a vertical reactor system (310), (ii) stirring the materials in the initial compartment (314), (iii) flowing the reaction product into a next adjacent compartment (322, 324, 326, 328) of the reactor system, (v) flowing reaction product from said next adjacent compartment to one or more additional reaction compartments (322, 324, 326, 328) of the reaction system (310), and withdrawing reaction products from the last compartments (316) of the reactor system,
**characterized by**
step (i) comprising the addition of alkali metal hydroxide, in step (ii) the materials reacting to form as a reaction product a glycidyl ether of the active hydrogen-containing species, in step (iii) the reaction product flowing by gravity through downcomers (342, 344, 346, 514, 516) into said at least one more compartment, the process including furthermore
(iv) adding additional alkali metal hydroxide to said next adjacent compartment and stirring the materials therein,
(vi) introducing a solvent into the vertical reactor system, removing by-product water from reactions in the compartments in a codistillate of the solvent and the by-product water from the compartments through vapor outlet nozzles (410).

8. A process for the continuous preparation of a liquid epoxy resin in a multiple-intercommunicating-compartment continuous vertical reactor system (310), the process comprising (i) introducing a 10:1 molar ratio mixture of epichlorohydrin and bisphenol A to a first compartment (314), (iii) liquid reaction product flowing from one compartment (314) to a next adjacent compartment (322, 324, 326, 328) and thus through all compartments (314, 316, 322, 324, 326, 328), (vii) withdrawing a liquid epoxy resin product from the last compartment (316),
**characterized by**
step (i) comprising furthermore introducing a stream of glycol monoether solvent along with said mixture in step (iii) the liquid reaction product flowing by gravity through downcomers (342, 344, 346, 514, 516) into the next adjacent compartment and the process comprising furthermore
(ii) feeding aqueous sodium hydroxide into each of the compartments (314, 322, 324, 326, 328) of the system (310) except to a last compartment (316), (iv) maintaining pressure in the system at about 21998 Pa (165 mm Hg), (v) maintaining temperature in the system at about 65°C, (vi) controlling the water concentration in the system at less than 0,3 weight percent, and (iix) keeping the total residence time of reactants in the compartments between 100 and 500 minutes.

## Patentansprüche

1. Verfahren zur kontinuierlichen Herstellung von Reaktionsprodukten aus der Reaktion flüssiger Reaktantenmaterialien, wobei die flüssigen Reaktantenmaterialien jeweils umfassen: Epihalogenhydrin und eine aktiven Wasserstoff enthaltende Spezies , 1,3-Dihalogen-2-propanol oder 2,3-Dihalogen-1-propanol oder Gemische davon, wobei das Verfahren umfaßt (i) in Kontakt Bringen der Reaktantenmaterialien zum Herstellen der Reaktionsprodukte in einem ersten Abteil (30, 146) eines Reaktorsystems (10, 130), (ii) Rühren der Materialien darin, (iii) Leiten von Reaktionsprodukten und Nebenprodukten vom ersten Abteil (30, 146) des Reaktorsystems in mindestens ein weiteres Abteil (32, 34, 36, 148, 150) des Reaktorsystems (10, 130) und (iiia) Einbringen von zusätzlichen Reaktantenmaterialien in das mindestens eine weitere Abteil (32, 34, 36, 38, 148, 150), wobei alle Abteile (32, 34, 36, 38, 148, 150) miteinander in Verbindung stehen, (iv) Rühren der Materialien in allen Abteilen und (vi) Entnehmen der flüssigen Reaktionsprodukte aus mindestens einem Abteil des Reaktorsystems,
dadurch gekennzeichnet,
daß das Reaktantenmaterial immer ein Alkalimetallhydroxid umfaßt, das Reaktorsystem horizontal angeordnet ist und das Verfahren zusätzlich umfaßt das Entnehmen von Dampfreaktionsprodukten aus den Abteilen aus einem gemeinsamen Raum (60, 152) über ihnen.

2. Verfahren nach Anspruch 1, wobei die aktiven Wasserstoff enthaltende Spezies Bisphenol-A ist.

3. Verfahren zur kontinuierlichen Herstellung eines flüssigen Epoxidharzes, wobei das Verfahren umfaßt (i) Einbringen von Epihalogenhydrin und einer aktiven Wasserstoff enthaltenden Spezies, in ein anfängliches Abteil (30, 146) eines Reaktorsystems (10, 130), (ii) Rühren der Materialien im anfänglichen Abteil (30, 146), (iii) Leiten des Reaktionsprodukts über ein Wehr (18, 20, 22, 24, 26, 28, 72, 78, 144) in ein nächstes angrenzendes Abteil (32, 34, 36, 38, 148, 150) des Reaktorsystems, (v) Leiten des Reaktionsprodukts von dem nächsten angrenzenden Abteil in ein oder mehrere zusätzliche Reaktionsabteile (32, 34, 36, 38, 148, 150) des Reaktionssystems (10, 130) und Entnehmen von Reaktionsprodukten aus den letzten Abteilen (32, 34, 36, 38, 148) des Reaktorsystems,
dadurch gekennzeichnet,
daß der Reaktor (10, 130) horizontal angeordnet ist, Schritt (i) den Zusatz von Alkalimetallhydroxid umfaßt, in Schritt (ii) die Materialien reagieren, wobei als ein Reaktionsprodukt ein Glycidylderivat der den aktiven Wasserstoff enthaltenden Spezies gebildet wird, das Verfahren weiterhin umfaßt, (iv) Einbringen von zusätzlichem Alkalimetallhydroxid in das nächste angrenzende Abteil und Rühren der Materialien darin, (vi) Einbringen eines Lösungsmittels in das horizontale Reaktorsystem, Entfernen von Nebenprodukt Wasser aus Reaktionen in den Abteilen in einem Co-Destillat des Lösungsmittels und des Nebenproduktwassers aus einen gemeinsamen Raum (60, 152) über den Abteilen, mit dem jedes Abteil in Verbindung steht.

4. Verfahren zur kontinuierlichen Herstellung eines flüssigen Epoxidharzes in einem kontinuierlichen Reaktorsystem (10, 130) mit mehrfach miteinander in Verbindung stehenden Abteilen, wobei jedes Abteil (30, 32, 34, 36, 38, 146, 148, 150) mit einem gemeinsamen Kopfraum (60, 152) innerhalb des Systems in Verbindung steht, wobei das Verfahren umfaßt, (i) Einbringen eines Gemisches von Epichlorhydrin und Bisphenol-A in einem molaren Verhältnis von 10:1 in ein erstes Abteil (30, 146), (iii) Leiten von flüssigem Reaktionsprodukt von einem Abteil (30, 146) in ein nächstes angrenzendes Abteil (32, 34, 36, 38, 148, 150) und somit durch alle Abteile (30, 32, 34, 36, 38, 146, 148, 150), (vii) Entnehmen eines flüssigen Epoxidharzprodukts aus dem letzten Abteil (38, 148),
dadurch gekennzeichnet,
daß das Reaktorsystem horizontal angeordnet ist, Schritt (i) weiterhin umfaßt, Einbringen eines Stromes von Glykolmonoetherlösungsmittel zusammen mit dem Gemisch, und das Verfahren weiterhin umfaßt, (ii) Einspeisen von wäßrigem Natriumhydroxid in jedes der Abteile (30, 32, 34, 36, 146, 150) des Systems (10, 130) außer in das letzte Abteil (38, 148), (iv) Aufrechterhalten eines Drucks im System von ungefähr 22 kPa (165 mm Hg), (v) Aufrechterhalten einer Temperatur im System von ungefähr 65°C, (vi) Regeln der Wasserkonzentration im System auf weniger als 0,3 Gew.-% und (iix) Einhalten der Gesamtverweilzeit von Reaktanten in den Abteilen zwischen 100 und 500 Minuten.

5. Verfahren zur kontinuierlichen Herstellung von Reaktionsprodukten aus der Reaktion von flüssigen Reaktantenmaterialien, wobei die flüssigen Reaktantenmaterialien jeweils umfassen: Epihalogenhydrin und eine aktiven Wasserstoff enthaltende Spezies, 1,3-Dihalogen-2-propanol oder 2,3-Dihalogen-1-propanol oder Gemische davon, wobei das Verfahren umfaßt (i) in Kontakt Bringen der Reaktantenmaterialien zur Herstellung der Reaktionsprodukte in einem ersten Abteil (314) eines vertikalen Reaktorsystems (310), (ii) Rühren der Materialien darin, (iii) Leiten von Reaktionsprodukten und Nebenprodukten aus dem ersten Abteil (314) des Reaktantensystems zu mindestens einem weiteren Abteil (322, 324, 326, 328) des Reaktorsystems (310) und (iiia) Einbringen von zusätzlichen Reaktantenmaterialien in das mindestens eine weitere Abteil (322, 324, 326, 328), wobei alle Abteile (314, 316, 322, 324, 326, 328) miteinander in Verbindung stehen, (iv) Rühren der Materialien in allen Abteilen und (vi) Entnehmen der flüssigen Reaktionsprodukte aus mindestens einem Abteil des Reaktorsystems,
dadurch gekennzeichnet,
daß das Reaktantenmaterial immer ein Alkalimetallhydroxid umfaßt, daß Reaktanten mittels Schwerkraft durch Fallrohre (323, 344, 346, 514, 516) in das mindestens eine weitere Abteil fließen, und daß das Verfahren zusätzlich umfaßt, Entnehmen von Dampfreaktionsprodukten aus den Abteilen durch Dampfauslaßdüsen (410).

6. Verfahren nach Anspruch 5, wobei die aktiven Wasserstoff enthaltende Spezies Bisphenol-A ist.

7. Verfahren zur kontinuierlichen Herstellung eines flüssigen Epoxidharzes, wobei das Verfahren umfaßt (i) Einbringen von Epihalogenhydrin und einer aktiven Wasserstoff enthaltenden Spezies in ein oberstes Abteil (314) eines vertikalen Reaktorsystems (310), (ii) Rühren der Materialien in dem Anfangsabteil (314), (iii) Leiten des Reaktionsprodukts in ein nächstes angrenzendes Abteil (322, 324, 326, 328) des Reaktorsystems, (v) Leiten von Reaktionsprodukt aus dem nächsten angrenzenden Abteil in ein oder mehrere weitere Reaktionsabteile (322, 324, 326, 328) des Reaktionssystems (310) und Entfernen von Reaktionsprodukten aus den letzten Abteilen (316) des Reaktorsystems,
dadurch gekennzeichnet,
daß Schritt (i) die Zugabe von Alkalimetallhydroxid umfaßt, in Schritt (ii) die Materialien reagieren, wobei als Reaktionsprodukt ein Glycidylether der aktiven Wasserstoff enthaltenden Spezies gebildet wird, in Schritt (iii) das Reaktionsprodukt mittels Schwerkraft durch Fallrohre (342, 344, 346, 514, 516) in das mindestens eine weitere Abteil fließt, das Verfahren weiterhin umfaßt (iv) Einbringen von zusätzlichem Alkalimetallhydroxid in das nächste angrenzende Abteil und Rühren der Materialien darin, (vi) Einbringen eines Lösungsmittels in das vertikale Reaktorsystem, Entfernen von Nebenprodukt Wasser aus Reaktionen in den Abteilen in einem Co-Destillat des Lösungsmittels und des Nebenproduktwassers aus den Abteilen durch Dampfauslaßdüsen (410).

8. Verfahren für die kontinuierliche Herstellung eines flüssigen Epoxidharzes in einem kontinierlichen vertikalen Reaktorsystem (310) mit mehrfach miteinander in Verbindung stehenden Abteilen, wobei das Verfahren umfaßt (i) Einbringen eines Gemisches von Epichlorhydrin und Bisphenol-A in einem molaren Verhältnis von 10:1 in ein erstes Abteil (314), (iii) Leiten von flüssigem Reaktionsprodukt von einem Abteil (314) in ein nächstes angrenzendes Abteil (322, 324, 326, 328) und somit durch alle Abteile (314, 316, 322, 324, 326, 328), (vii) Entnehmen eines flüssigen Epoxidharzprodukts aus dem letzten Abteil (316),
dadurch gekennzeichnet,
daß Schritt (i) weiterhin umfaßt, Einbringen eines Stroms von Glykolmonoetherlösungsmittel zusammen mit dem Gemisch, daß in Schritt (iii) das flüssige Reaktionsprodukt mittels Schwerkraft durch Fallrohre (342, 344, 346, 514, 516) in das nächste angrenzende Abteil fließt und das Verfahren weiterhin umfaßt (ii) Einspeisen von wäßrigem Natriumhydroxid in jedes der Abteile (314, 322, 324, 326, 328) des Systems (310) außer in ein letztes Abteil (316), (iv) Aufrechterhalten eines Drucks im System bei ungefähr 21998 Pa (165 mm Hg), (v) Aufrechterhalten einer Temperatur im System von ungefähr 65°C, (vi) Regeln der Wasserkonzentration im System auf weniger als 0,3 Gew.-% und (iix) Einhalten der Gesamtverweildauer von Reaktanten in den Abteilen zwischen 100 und 500 Minuten.

## Revendications

1. Procédé de préparation en continu des produits de la réaction de substances réactives liquides, ces substances réactives liquides comprenant une épihalogénhydrine et un composé contenant de l'hydrogène actif, ou un 1,3-dihalogénopropanol-2 ou un 2,3-dihalogénopropanol-1 ou un de leurs mélanges, ledit procédé comportant :
a) le fait de mettre les substances réactives en contact pour produire les produits de réaction dans un premier compartiment (30, 146) d'un système de réacteur (10, 130) ;
b) le fait d'agiter les substances qui s'y trouvent ;
c) le fait de faire couler les produits de réaction et les sous-produits du premier compartiment (30, 146) du système de réacteur dans au moins un compartiment supplémentaire (32, 34, 36, 148, 150) du système de réacteur (10, 130), et
c1) le fait d'ajouter une quantité supplémentaire de substances réactives dans les compartiments supplémentaires au nombre d'au moins un (32, 34, 36, 38, 148, 150), tous ces compartiments (32, 34, 36, 38, 148, 150) étant en communication les uns avec les autres ;
d) le fait d'agiter les substances dans tous les compartiments ; et
e) le fait d'enlever les produits liquides de réaction d'au moins un compartiment du système de réacteur ;
procédé caractérisé en ce que les substances réactives comprennent dans chaque cas un hydroxyde de métal alcalin, que le système de réacteur est aligné horizontalement, et que le procédé comporte en outre le fait d'enlever les produits gazeux de réaction des compartiments par un espace commun (60, 152) situé au-dessus d'eux.

2. Procédé conforme à la revendication 1, dans lequel le composé contenant de l'hydrogène actif est du bisphénol A.

3. Procédé de préparation en continu d'une résine époxyde liquide, ledit procédé comportant :
a) le fait d'introduire une épihalogénhydrine et un composé contenant de l'hydrogène actif dans un compartiment initial (30, 146) d'un système de réacteur (10, 130) ;
b) le fait d'agiter les substances dans le compartiment initial (30, 146) ;
c) le fait de faire couler les produits de réaction, par un déversoir (18, 20, 22, 24, 26, 28, 72, 78, 144), dans un compartiment adjacent suivant (32, 34, 36, 38, 148, 150) du système de réacteur ;
e) le fait de faire couler les produits de réaction, depuis ledit compartiment adjacent suivant, dans un ou plusieurs compartiments supplémentaires de réaction (32, 34, 36, 38, 148, 150) du système de réacteur (10, 130), et le fait d'enlever les produits de réaction des derniers compartiments (32, 34, 36, 38, 148) du système de réacteur ;
procédé caractérisé en ce que le réacteur (10, 130) est aligné horizontalement, que l'étape (a) comporte le fait d'ajouter un hydroxyde de métal alcalin, que dans l'étape (b), les substances réagissent pour donner, comme produit de réaction, un dérivé glycidylique du composé contenant de l'hydrogène actif, et que le procédé comporte en outre :
d) le fait d'ajouter une quantité supplémentaire d'hydroxyde de métal alcalin dans ledit compartiment adjacent suivant et d'agiter les substances qui s'y trouvent ; et
f) le fait d'introduire un solvant dans le système de réacteur horizontal, et de retirer l'eau, formée en tant que sous-produit, des réactions se déroulant dans les compartiments, dans un co-distillat du solvant et de ce sous-produit qu'est l'eau, par un espace commun (60, 152) situé au-dessus des compartiments et avec lequel communique chaque compartiment.

4. Procédé de préparation en continu d'une résine époxyde liquide, dans un système de réacteur en continu (10, 130) à multiples compartiments intercommunicants (30, 32, 34, 36, 38, 146, 148, 150), dont chacun communique avec un espace supérieur commun (60, 152) à l'intérieur du système, ledit procédé comportant :
a) le fait d'introduire un mélange d'épichlorhydrine et de bisphénol A, en un rapport molaire de 10/1, dans un premier compartiment (30, 146) ;
c) le fait de faire couler le produit liquide de réaction d'un compartiment (30, 146) dans un compartiment adjacent suivant (32, 34, 36, 38, 148, 150), et donc dans tous les compartiments (30, 32, 34, 36, 38, 146, 148, 150) ; et
g) le fait d'enlever le produit, une résine époxyde liquide, du dernier compartiment (38, 148) ;
procédé caractérisé en ce que le système de réacteur est aligné horizontalement, que l'étape (a) comporte en outre le fait d'introduire un courant de monoéther de glycol en tant que solvant, en même temps que ledit mélange, et que le procédé comporte en outre :
b) le fait d'introduire une solution aqueuse d'hydroxyde de sodium dans chacun des compartiments (30, 32, 34, 36, 146, 150) du système (10, 130), sauf dans le dernier compartiment (38, 148) ;
d) le fait de maintenir la pression régnant dans le système à une valeur d'environ 22 kPa (165 mm Hg) ;
e) le fait de maintenir la température régnant dans le système à une valeur d'environ 65°C ;
f) le fait de maintenir la concentration d'eau dans le système à une valeur inférieure à 0,3 % en poids ; et
h) le fait de maintenir les réactifs dans les compartiments pendant un temps de séjour total compris entre 100 et 500 minutes.

5. Procédé de préparation en continu des produits de la réaction de substances réactives liquides, ces substances réactives liquides comprenant une épihalogénhydrine et un composé contenant de l'hydrogène actif, ou un 1,3-dihalogénopropanol-2 ou un 2,3-dihalogénopropanol-1 ou un de leurs mélanges, ledit procédé comportant :
a) le fait de mettre les substances réactives en contact pour produire les produits de réaction dans un premier compartiment (314) d'un système de réacteur vertical (310) ;
b) le fait d'agiter les substances qui s'y trouvent ;
c) le fait de faire couler les produits de réaction et les sous-produits, depuis le premier compartiment (314) du système de réacteur, dans au moins un compartiment supplémentaire (322, 324, 326, 328) du système de réacteur (310), et
c1) le fait d'ajouter une quantité supplémentaire de substances réactives dans les compartiments supplémentaires au nombre d'au moins un (322, 324, 326, 328), tous ces compartiments (314, 316, 322, 324, 326, 328) étant en communication les uns avec les autres ;
d) le fait d'agiter les substances dans tous les compartiments ; et
e) le fait d'enlever les produits liquides de réaction d'au moins un compartiment du système de réacteur ;
procédé caractérisé en ce que les substances réactives comprennent dans chaque cas un hydroxyde de métal alcalin, que les substances réactives s'écoulent par gravité, en passant par des déversoirs (342, 344, 346, 514, 516), dans lesdits compartiments supplémentaires au nombre d'au moins un, et que le procédé comporte en outre le fait d'enlever les produits gazeux de réaction des compartiments par des buses de sortie de vapeurs (410).

6. Procédé conforme à la revendication 5, dans lequel le composé contenant de l'hydrogène actif est du bisphénol A.

7. Procédé de préparation en continu d'une résine époxyde liquide, ledit procédé comportant :
a) le fait d'introduire une épihalogénhydrine et un composé contenant de l'hydrogène actif dans le compartiment de sommet (314) d'un système de réacteur vertical (310) ;
b) le fait d'agiter les substances dans ce compartiment initial (314) ;
c) le fait de faire couler les produits de réaction dans un compartiment adjacent suivant (322, 324, 326, 328) du système de réacteur ;
e) le fait de faire couler les produits de réaction, depuis ledit compartiment adjacent suivant, dans un ou plusieurs compartiments supplémentaires de réaction (322, 324, 326, 328) du système de réacteur (310), et le fait d'enlever les produits de réaction des derniers compartiments (316) du système de réacteur ;
procédé caractérisé en ce que l'étape (a) comporte le fait d'ajouter un hydroxyde de métal alcalin, que dans l'étape (b), les substances réagissent pour donner, comme produit de réaction, un dérivé glycidylique du composé contenant de l'hydrogène actif, que dans l'étape (c), les produits de réaction s'écoulent par gravité, en passant par des déversoirs (342, 344, 346, 514, 516), dans lesdits compartiments supplémentaires au nombre d'au moins un, et que le procédé comporte en outre :
d) le fait d'ajouter une quantité supplémentaire d'hydroxyde de métal alcalin dans ledit compartiment adjacent suivant et d'agiter les substances qui s'y trouvent ; et
f) le fait d'introduire un solvant dans le système de réacteur vertical, et de retirer l'eau, formée en tant que sous-produit, des réactions se déroulant dans les compartiments, en faisant sortir des compartiments, par des buses de sortie (410) de vapeurs, un co-distillat du solvant et de ce sous-produit qu'est l'eau.

8. Procédé de préparation en continu d'une résine époxyde liquide, dans un système de réacteur vertical en continu (310) à multiples compartiments intercommunicants, ledit procédé comportant :
a) le fait d'introduire un mélange d'épichlorhydrine et de bisphénol A, en un rapport molaire de 10/1, dans un premier compartiment (314) ;
c) le fait de faire couler les produits liquides de réaction d'un compartiment (314) dans un compartiment adjacent suivant (322, 324, 326, 328), et donc dans tous les compartiments (314, 316, 322, 324, 326, 328) ; et
g) le fait de retirer le produit, une résine époxy liquide, du dernier compartiment (316) ;
procédé caractérisé en ce que l'étape (a) comporte en outre le fait d'introduire un courant de monoéther de glycol en tant que solvant, en même temps que ledit mélange, que dans l'étape (c), le produit liquide de réaction s'écoule par gravité, par des déversoirs (342, 344, 346, 514, 516) dans le compartiment adjacent suivant, et que le procédé comporte en outre :
b) le fait d'introduire une solution aqueuse d'hydroxyde de sodium dans chacun des compartiments (314, 322, 324, 326, 328) du système (310), sauf dans le dernier compartiment (316) ;
d) le fait de maintenir la pression régnant dans le système à une valeur d'environ 21998 Pa (165 mm Hg) ;
e) le fait de maintenir la température régnant dans le système à une valeur d'environ 65°C ;
f) le fait de maintenir la concentration d'eau dans le système à une valeur inférieure à 0,3 % en poids ; et
h) le fait de maintenir les réactifs dans les compartiments pendant un temps de séjour total compris entre 100 et 500 minutes.
